# EUROPEAN PATENT SPECIFICATION

(11) **EP 2 230 184 B1**
(45) Date of publication and mention of the grant of the patent: **22.08.2012**
(21) Application number: 10157125.5
(22) Date of filing: 19.03.2010
(51) Int. Cl.: B65D 1/34, B65D 85/36, B65D 65/46

(54) **Pizza packaging**
Verpackung für Pizza
Emballage pour pizza

(30) Priority: 19.03.2009 NL 2002639
(43) Date of publication of application: 22.09.2010
(73) Proprietor: Van Ballegoijen-de Jong, Tijs, 1012 RT Amsterdam (NL)
(72) Inventor: Van Ballegoijen-de Jong, Tijs, 1012 RT Amsterdam (NL)
(74) Representative: Klavers, Cornelis

(56) References cited:
- WO-A-2008/020214
- WO-A-2008/028222
- AU-B2- 512 497
- NL-C2- 2 001 541
- US-A- 4 974 738
- US-A- 5 843 544
- US-A1- 2002 175 164
- US-A1- 2004 144 781
- US-A1- 2006 060 579
- US-A1- 2009 057 381

## Description

The present invention relates to a pizza package according to the preamble of claim 1.

A pizza package is known from US-3,938,726. The pizza package that is known therefrom has identical package parts comprising a rib-reinforced bottom part and a cover part that fits therein and thereon. Each of said parts comprises a recessed tray and an elevated lateral rim provided with an outer edge, which extends along the circumference of said tray. Two types of closure means are formed in said rim, by means of which the package can be closed after the two parts have been placed one on the other. The outer edge of the rim is interrupted by outwardly opening notches or cut-outs of a first type. In an embodiment shown in figure 8 of said document, tapered tabs or buttons of a second type located within the outer edge are furthermore provided in the rim, which tabs or buttons are brought into engagement with the closure means of the first type upon closure of the package, thus holding and locking the two package parts together. According to said document, it is the stiffness of the parts, in combination with the frictional contact therebetween, which keeps the package parts interlocked.

The interlocking tapered tabs only exert radially inwardly oriented, friction-based pressure forces on the two package parts, however. As a result, there is an increased risk that when an object is placed on the tray and the parts are closed, the bottom part will sag under the weight of said object, to such an extent that the notches in the rim of the bottom part will move towards each other to a significant extent. The effect of this is that the tapered tabs of the cover part, which engage in said notches, will be pressed in radially inward direction, causing the cover to spring open. Reinforcing the bottom part with ribs, thus adding to the weight of the bottom part, will be necessary in that case in order to retain the required stiffness and to prevent the aforesaid effect.

A pizza package known from WO 2008020214 from which claim 1 is delimited comprises two separate, identical parts which parts each have the shape and/or the dimension of a plate. These parts can be nested when in the same orientation and are made exclusively of a biodegradable fibre material, such as palm-fibre material. Each tray comprises a rim extending on the outer side thereof, which rim has closure means configured as interlocking closure means in the form of tabs to be pressed out, through and together with a clamping fit. The closure means are both located at circumferential positions such that the package will close when the upper sides of the closure tab means are pressed together.

US 4974738 discloses a container for foods comprising two separate, identical parts which can be nested when in the same orientation and which are made of a plastic microwave transparent disposable material. Each part comprises a tray and a rim extending on the outer side thereof, which rim forms two types of complementary closure means which alternate as regards their type in regions along the rim. The package parts have has closure means configured as interlocking closure means to be pressed together with a clamping fit which is to be opened by bending a lip segment. The closure means are both located at circumferential positions such that the package will close when the upper sides of the complementary closure means are pressed together.

The object of the present invention is to provide a light-weight package for objects, in particular flat objects, which is easy to produce, using little, exclusively environmentally friendly material, and which has an improved closure system.

In order to accomplish that object, the pizza package according to the invention has the features of the sole claim.

The package according to the invention has the advantage that the rim forms closure means, so that practically no material of the rim is usefully used for any purpose other than for forming the closure means. Advantageously, hardly any material of the package is wasted in that case, whilst in addition an adequate closure all around between the two parts is obtained.

The design of such closure means, which butt closely against the circumference of the tray in practice, obviates the need to use reinforcing ribs as mentioned with regard to the prior art or a comparatively stronger or thicker bottom, thus creating the advantageous possibility in practice to design the two package parts, which will be light in weight in that case, as identical parts. Only one mould is further needed for producing one type of package part of the two-part package according to the invention, which will have a positive effect on the cost price.

Furthermore, the entire two-part package is made of the same sugar cane material. The fact is that it has been found that the two types of complementary closure means, which are to be pressed together with sufficient clamping force, can also be efficiently made of said same material and nevertheless provide an adequate closure. This is not something that is self-evident, since closure means which, as is well-known, are provided in or on a rim are in some cases insufficiently capable of providing the closing forces that are required in practice, as a result of which the contents can fall out of the package. This is true in particular when packages filled with an object are being manually transported, for example, during which transport the package and the closure means may be subjected to considerable bending and torsional forces. The complementary closure means configured and positioned in a specified manner, however, are capable of taking up the required closing forces in spite of being implemented in sugar cane, even if in practice the package parts bend and/or twist, at least if the rim forms the two types of complementary closure means and not, therefore, if the closure means are simply formed on the rim. It has been found that in the latter case, given the properties of the sugar cane, it is not possible to produce the required closing forces. It has furthermore been found that if the rim forms said two types of complementary closure means, there is no need to reinforce the bottom of the package according to the invention or make it extra strong or extra thick, which leads to a further cost price reduction.

Advantageous is furthermore the fact that the rim that forms the two complementary closure means leaves intact and enhances the optical association of each of the package parts as a plate. This increases the economic value and the degree of acceptance of the package according to the invention with the public at large. This is also advantageous for the environment, because it is no longer necessary to wash up pizza plates with the associated use of washing water and washing-up liquid.

The package according to the present invention will now be explained in more detail with reference to the figures below.

Fig. 1 shows an embodiment of a package having complementary closure means for application in the pizza package according to the invention, and

Fig. 2 provides a detailed view of a possible embodiment of complementary closure means which take up the rim of the package parts in its entirety for application in the pizza package according to the invention.

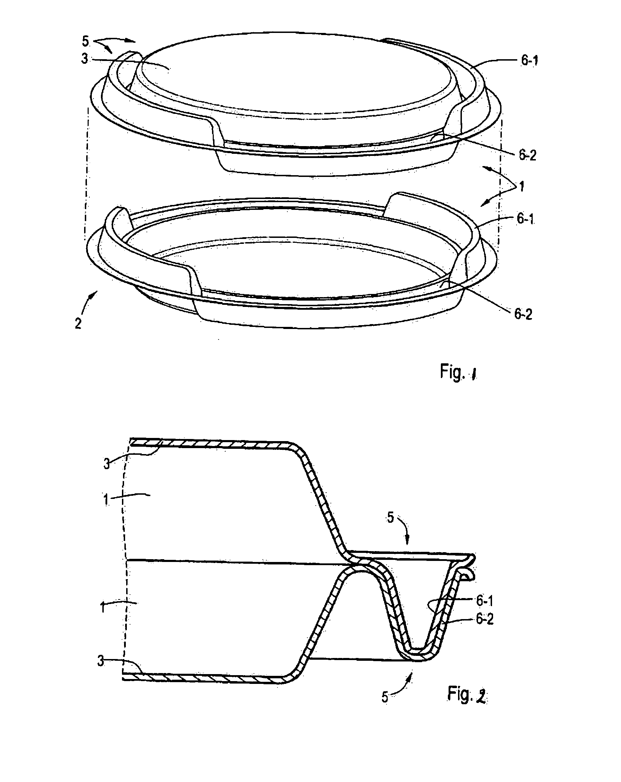

Figures 1, and 2 each show two package parts 1, which are identical in shape and which, after being suitably rotated and turned upside-down, can be placed one on top of the other. Each package part 1 forms part of a package 2 for objects, in particular flat, possibly edible objects, for example pizzas. The package 2 as shown comprises two, usually identical, parts 1 that fit into each other, each part being provided with a recessed tray 3 and with an elevated lateral rim 5 extending along the circumference of the tray 3, which rim has an outer edge 4. In the embodiment of figure 1, two types of closure means 6-1, 6-2 fitting into each other with a clamping fit are provided in the rim 5.

The closure means as shown, jointly referred to by reference numeral 6, which can be pressed together with a clamping fit.

Sugar care is environmentally friendly and biodegradable. Especially pressed sugar cane appears to be strong, without reinforcing ribs being needed, and yet easy to tear up and thus easy to discard in a normal wastebasket, this in contrast to a known pizza box provided with an attached cover.

In practice it is preferable if the package 2, i.e. the two, furthermore preferably identical, package parts 1 each have the shape and/or the dimension of a usual stackable plate, from which an edible object, such as a pizza, can be directly consumed by the user(s). The package plates, which can be supplied in stacked condition, can be circular in shape. Instead of the 2x2 positions of the alternating means 6-1 and 6-2 on a part 1, as shown in the figures, also other combinations are possible, such as 2x3 or 2x4.

Figure 1 shows an embodiment of a package 2 which comprises two identical package parts 1, which completely fit together when correctly stacked, with the rim 5 forming the 2x2 regions of the complementary closure means 6-1 and 6-2. In this embodiment the rim 5 is fully taken up by the means 6 arranged in alternating relationship along the rim 5.

Advantageously, all that is needed is to press the closure means 6-1 and 6-2 that are to be moved together onto each other in order to effect a quick closure of the package. It is not necessary, therefore, to press edges or several individual closure means together at several angularly displaced positions by exerting manual force at various positions for closing the package 2. In the variants, the parts 1 are closed by manually pressing the closure means together at two diametrically opposite positions, possibly simultaneously and in a single operation.

## Claims

1. A pizza package (2) comprising two separate, identical parts (1) which parts each have a circular shape and the dimension of a plate, can be nested when in the same orientation and which are made exclusively of a biodegradable fibre material, each part (1) comprising a tray (3) and a rim (5) extending on the outer side (4) thereof, which rim (5) has closure means (6-1, 6-2) configured as interlocking complementary closure means to be pressed together with a clamping fit, which closure means (6-1, 6-2) are both located at circumferential positions such that the package (2) will close when the upper sides of the complementary closure means (6-1, 6-2) are pressed together, **characterised in that**:
- the rim (5) as a whole forms two types of complementary closure means (6-1, 6-2), whereby no rim material is used for any other purpose than for forming the means (6-1, 6-2),
- the complementary closure means (6-1, 6-2) alternate as regards their type in regions along the rim (5),
- the sectional shape of the rim (5) is V-shaped having tapered walls and a flat bottom , and
- the biodegradable fibre material is sugar cane.

## Patentansprüche

1. Pizzaverpackung (2), umfassend zwei gesonderte, identische Teile (1), wobei die Teile jeweils eine runde Form und die Abmessung eines Tellers aufweisen, verschachtelt werden können, wenn sie sich in der gleichen Ausrichtung befinden, und ausschließlich aus einem biologisch abbaubaren Fasermaterial bestehen, wobei jeder Teil (1) eine Schale (3) und einen Rand (5), der sich an ihrer Außenseite (4) erstreckt, aufweist, wobei der Rand (5) Verschlussmittel (6-1, 6-2) aufweist, die als ineinandergreifende komplementäre Verschlussmittel gestaltet sind, welche mit einer Klemmpassung aneinander zu pressen sind, wobei die Verschlussmittel (6-1, 6-2) beide so an umfänglichen Positionen angeordnet sind, dass sich die Verpackung (2) schließen wird, wenn die oberen Seiten der komplementären Verschlussmittel (6-1, 6-2,) aneinander gepresst werden, **dadurch gekennzeichnet, dass**
- der Rand (5) als Ganzes zwei Arten von komplementären Verschlussmitteln (6-1, 6-2) bildet, wobei kein Randmaterial für irgendeinen anderen Zweck als das Bilden der Mittel (6-1, 6-2) verwendet wird,
- die komplementären Verschlussmittel (6-1, 6-2) im Hinblick auf ihre Art entlang des Rands (5) abwechseln,
- die Querschnittform des Rands (5) V-förmig mit konischen Wänden und einem flachen Boden ist, und
- das biologisch abbaubare Fasermaterial Zuckerrohr ist.

## Revendications

1. Emballage pour pizza (2) comprenant deux parties identiques séparées (1), lesquelles parties ont chacune une forme circulaire et la dimension d'une assiette, peuvent être emboîtées lorsqu'elles sont dans la même orientation et sont faites exclusivement d'un matériau fibreux biodégradable, chaque partie (1) comprenant un plateau (3) et un bord (5) s'étendant sur le côté extérieur (4) de celle-ci, lequel bord (5) présente des moyens de fermeture (6-1, 6-2) configurés en tant que moyens de fermeture complémentaires s'interverrouillant destinés à être appuyés ensemble avec un ajustement par serrage, lesquels moyens de fermeture (6-1, 6-2) sont situés tous deux sur des positions circonférentielles de telle façon que l'emballage (2) se fermera lorsque les côtés supérieurs des moyens de fermeture complémentaires (6-1, 6-2) sont appuyés ensemble, **caractérisé en ce que** :
- le bord (5) dans son ensemble forme deux types de moyens de fermeture complémentaires (6-1, 6-2), ce qui fait qu'aucun matériau de bord n'est utilisé dans d'autre but que de former les moyens (6-1, 6-2),
- les moyens de fermeture complémentaires (6-1, 6-2) sont alternés en fonction de leur type dans des zones le long du bord (5),
- la forme de la section du bord (5) est en V avec des parois coniques et un fond plat, et
- le matériau fibreux biodégradable est de la canne à sucre.
